(19) Europäisches Patentamt / European Patent Office / Office européen des brevets

(11) **EP 4 361 108 A1**

(12) **EUROPEAN PATENT APPLICATION**

(43) Date of publication:
**01.05.2024 Bulletin 2024/18**

(21) Application number: **23181062.3**

(22) Date of filing: **22.06.2023**

(51) International Patent Classification (IPC):
**C01G 53/00** (2006.01)   **C01G 45/00** (2006.01)
**H01M 4/505** (2010.01)

(52) Cooperative Patent Classification (CPC):
**C01G 45/1228; C01G 45/125; C01G 53/00;**
**C01G 53/44; C01G 53/50; H01M 4/505;**
C01P 2002/54; C01P 2002/76; C01P 2004/45;
C01P 2004/53; C01P 2004/62; C01P 2004/64;
C01P 2006/40

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.10.2022 KR 20220140212**

(71) Applicant: **ECOPRO BM CO., LTD.**
**Cheongju-si, Chungcheongbuk-do 28116 (KR)**

(72) Inventors:
• **LIM, Ra Na**
  **28116 Cheongju-si, Chungcheongbuk-do (KR)**
• **JUNG, Hyun Su**
  **28116 Cheongju-si, Chungcheongbuk-do (KR)**
• **LIM, Kyung Min**
  **28116 Cheongju-si, Chungcheongbuk-do (KR)**
• **KIM, Seong Kyun**
  **28116 Cheongju-si, Chungcheongbuk-do (KR)**
• **PARK, Eun Hee**
  **28116 Cheongju-si, Chungcheongbuk-do (KR)**

(74) Representative: **BCKIP Part mbB**
**Siegfriedstraße 8**
**80803 München (DE)**

(54) **POSITIVE ELECTRODE ACTIVE MATERIAL AND LITHIUM SECONDARY BATTERY COMPRISING THE SAME**

(57) The present invention relates to a positive electrode active material and a lithium secondary battery including the same, and more particularly, to a bimodal-type positive electrode active material for improving the low energy density per unit volume of an overlithiated lithium manganese-based oxide and a lithium secondary battery including the same.

**Description**

BACKGROUND

**1. Field of the Invention**

The present invention relates to a positive electrode active material and a lithium secondary battery including the same, and more particularly, to a bimodal-type positive electrode active material for improving the low energy density per unit volume of an overlithiated lithium manganese-based oxide and a lithium secondary battery including the same.

**2. Discussion of Related Art**

Batteries store electrical power by using materials facilitating an electrochemical reaction at a positive electrode and a negative electrode. As a representative example of such batteries, there is a lithium secondary battery storing electrical energy due to a difference in chemical potential when lithium ions are intercalated/deintercalated into/from a positive electrode and a negative electrode.

The lithium secondary battery uses materials enabling reversible intercalation/deintercalation of lithium ions as positive electrode and negative electrode active materials and is manufactured by charging an organic electrolyte solution or a polymer electrolyte solution between the positive electrode and the negative electrode.

A representative material used as a positive electrode active material of a lithium secondary battery is a lithium composite oxide. The lithium composite oxide may be $LiCoO_2$, $LiMn_2O_4$, $LiNiO_2$, $LiMnO_2$, or an oxide in which Ni, Co, Mn or Al is complexed.

Among the positive electrode active materials, $LiCoO_2$ is most widely used due to excellent lifetime characteristics and charging/discharging efficiency, but it is expensive due to cobalt being a limited resource, which is used as a raw material, and thus has a disadvantage of limited price competitiveness.

Lithium manganese oxides such as $LiMnO_2$ and $LiMn_2O_4$ have advantages of excellent thermal safety and low costs, but also have problems of small capacity and poor high-temperature characteristics. In addition, while a $LiNiO_2$-based positive electrode active material exhibits a battery characteristic such as a high discharge capacity, due to cation mixing between Li and a transition metal, it is difficult to synthesize the $LiNiO_2$-based positive electrode active material, thereby causing a big problem in rate characteristics.

In addition, depending on the intensification of such a cation mixing, a large amount of Li by-products is generated. Since most of the Li by-products include LiOH and $Li_2CO_3$, they may cause gelation in preparation of a positive electrode paste, or cause gas generation according to repeated charging/discharging after the manufacture of an electrode. In addition, residual $Li_2CO_3$ in the Li by-product increases cell swelling to act as the cause of degrading a lifetime characteristic.

Various candidate materials for compensating for these shortcomings of conventional positive electrode active materials are being suggested.

In one example, there is on-going research to use an overlithiated lithium manganese-based oxide in which an excess of Mn among transition metals is included and a lithium content is higher than the sum of the contents of the transition metals as a positive electrode active material for a lithium secondary battery. Such an overlithiated lithium manganese-based oxide is also referred to as an overlithiated layered oxide (OLO).

Although the OLO has an advantage in that it can theoretically exhibit high capacity under a high voltage operating environment, in fact, due to an excessive amount of Mn contained in the oxide, the electric conductivity is relatively low, and thus the rate characteristic of a lithium secondary battery using OLO is low. As such, when the rate characteristic is low, there is a problem in which charge/discharge capacity and lifetime efficiency (capacity retention) are degraded during the cycling of a lithium secondary battery.

In addition, due to a high porosity in terms of the characteristics of a material, OLO has a disadvantage of a low energy density per unit volume.

To solve the above-described problems, although various research of changing the composition of OLO have been conducted, such attempts have not yet reached the level of commercialization.

SUMMARY OF THE INVENTION

In the lithium secondary battery market, the growth of lithium secondary batteries for electric vehicles is driving the market, and accordingly, the demand for positive electrode active materials used in lithium secondary batteries is also continuously increasing.

For example, conventionally, to ensure stability, lithium secondary batteries using LFP have mainly been used, but recently, the use of a nickel-based lithium composite oxide having a larger energy capacity per weight than LFP tends to be increasing.

In addition, recently, nickel-based lithium composite oxides mainly used as positive electrode active materials for high-capacity lithium secondary batteries essentially use three-component metal elements such as nickel, cobalt and manganese or nickel, cobalt and aluminum. However, since cobalt is not only unstable in supply, but also excessively expensive compared to other raw materials, a positive electrode active material with a new composition, which can reduce a cobalt content or exclude cobalt is needed.

Considering these circumstances, although an overlithiated lithium manganese-based oxide can meet the above-mentioned expectations of the market, there is a limitation that electrochemical properties or stability of the lithium manganese-based oxide are still insufficient to replace a commercially available positive electrode active material such as a ternary lithium composite oxide with a nickel-cobalt-manganese (NCM) or nickel-cobalt-aluminum (NCA) composition.

For example, the disadvantage of the low energy density per unit volume of OLO due to the composition of a material (including an excess of lithium) and its structural characteristic (high porosity) has been described above.

However, the present inventors confirmed that a low energy density per unit volume of an overlithiated lithium manganese-based oxide may be improved by preparing the lithium manganese-based oxide by dividing it into small and large particles and providing a bimodal-type positive electrode active material as a mixture of the small and larger particles.

Accordingly, the present invention is directed to providing a bimodal-type positive electrode active material for improving a low energy density per unit volume of an overlithiated lithium manganese-based oxide.

In addition, the present invention is directed to providing a positive electrode active material capable of further improving the energy density per unit volume of a bimodal-type positive electrode active material by allowing at least one of a small particle and a large particle to include a secondary particle in which the growth of primary particles is induced.

Particularly, as the inner porosity of the secondary particle (porosity between primary particles) is reduced, the secondary particle in which the growth of primary particles is induced, included in at least one of a small particle and a large particle, may contribute to the improvement in energy density per unit volume of the bimodal-type positive electrode active material.

Moreover, as the specific surface area of the secondary particle is reduced, the secondary particle in which the growth of primary particles is induced, which is included in at least one of a small particle and a large particle, may prevent battery performance from being rapidly degraded due to a side rection during an initial battery reaction under a high voltage condition.

In addition, the present invention is directed to providing a lithium secondary battery using a positive electrode including the bimodal-type positive electrode active material defined herein, which is capable of preventing the degradation of electrochemical properties of a lithium secondary battery, including rate characteristics, caused by lithium and manganese in excess in conventional OLO, and realizing high stability by reducing side reactions between the positive electrode active material and a liquid electrolyte.

To solve the above-described technical problems, one aspect of the present invention provides a bimodal-type positive electrode active material including a first lithium manganese-based oxide as a small particle and a second lithium manganese-based oxide as a large particle.

The first lithium manganese-based oxide and the second lithium manganese-based oxide, which constitute the bimodal-type positive electrode active material, are oxides in which a phase belonging to a C2/m space group and a phase belonging to a R3-m space group are dissolved or complexed.

Generally, in a commercially available ternary lithium composite oxide with a nickel-cobalt-manganese (NCM) or nickel-cobalt-aluminum (NCA) composition, the phase belonging to the R3-m space group is present as a single phase, whereas, in the overlithiated lithium manganese-based oxide defined herein, a phase belonging to a C2/m space group and a phase belonging to an R3-m space group are dissolved or complexed.

In one embodiment, the first lithium manganese-based oxide and the second lithium manganese-based oxide include secondary particles formed by aggregating a plurality of primary particles.

Specifically, the first lithium manganese-based oxide and the second lithium manganese-based oxide each independently include at least one type of secondary particle selected from a secondary particle formed by aggregating a plurality of large-diameter primary particles and a secondary particle formed by aggregating a plurality of small-diameter primary particles.

Here, as at least one selected from the first lithium manganese-based oxide and the second lithium manganese-based oxide includes a secondary particle formed by aggregating a plurality of large-diameter primary particles, the energy density per unit volume of the bimodal-type positive electrode active material may be improved.

In one embodiment, in the first lithium manganese-based oxide, the secondary particle formed by aggregating a plurality of large-diameter primary particles and the secondary particle formed by aggregating a plurality of small-diameter primary particles may be included in a weight ratio of 10:90 to 100:0.

Here, while the average value of the minor axis lengths of the large-diameter primary particles may be 100 nm or more and 500 nm or less, the average value of the minor axis lengths of the small-diameter primary particles may be 50 nm or more and 300 nm or less and is smaller than that of the large-diameter primary particles.

The average values of the minor axis lengths of the primary particles may be measured for the primary particles exposed on the surface of the secondary particle from an SEM image of the secondary particle (e.g., calculated from 20 primary particles selected in the order from longest-to-shortest minor axis lengths from among the primary particles exposed on the surface of the secondary particle from the SEM image of the secondary particle).

In one embodiment, in the second lithium manganese-based oxide, a secondary particle formed by aggregating a plurality of large-diameter primary particles and a secondary particle formed by aggregating a plurality of small-diameter primary particles may be included in a weight ratio of 10:90 to 100:0.

Here, while the average value of the minor axis lengths of the large-diameter primary particles may be 100 nm or more and 500 nm or less, the average value of the major axis lengths of the small-diameter primary particles may be 50 nm or more and 300 nm or less and is smaller than that of the large-diameter primary particles.

The first lithium manganese-based oxide and the second lithium manganese-based oxide may each independently include at least one selected from nickel, cobalt and manganese.

More specifically, the first lithium manganese-based oxide and the second lithium manganese-based oxide may be represented by Formula 1 below.

[Formula 1]

$$rLi_2MnO_{3-b'}X_{b'} \cdot (1-r)Li_aM1_xM2_yM3_zO_{2-b}X_b$$

Wherein,

M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
M3 is at least one selected from W, Mo and Nb,
M1 to M3 do not overlap with each other,
X and X' are halogens that can substitute for at least some of the oxygens present in the lithium manganese-based oxide,
$0<r\leq0.7$, $0<a\leq1$, $0\leq b\leq0.1$, $0\leq b'\leq0.1$, $0<x\leq1$, $0\leq y<1$, $0\leq z\leq0.1$, and $0<x+y+z\leq1$.

At least one selected from the first lithium manganese-based oxide and the second lithium manganese-based oxide may include a secondary particle doped with at least one dopant selected from a metal cation dopant and a halogen anion dopant, and preferably, the secondary particle formed by aggregating a plurality of large-diameter primary particles may be doped with at least one dopant selected from a metal cation dopant and a halogen anion dopant.

Here, the metal cation dopant may be at least one selected from W, Mo and Nb, and the halogen anion dopant may be fluorine.

In addition, another aspect of the present invention provides a positive electrode including the above-described positive electrode active material.

Moreover, still another aspect of the present invention provides a lithium secondary battery using the above-described positive electrode.

DETAILED DESCRIPTION OF EXEMPLARY EMBODIMENTS

In order to better understand the present invention, certain terms are defined herein for convenience. Unless defined otherwise herein, scientific and technical terms used herein will have meanings commonly understood by those of ordinary skill in the art. In addition, unless specifically indicated otherwise, terms in a singular form also include plural forms, and terms in a plural form should be understood to include singular forms as well.

Hereinafter, a positive electrode active material including an overlithiated lithium manganese-based oxide and a lithium secondary battery including the positive electrode active material according to some embodiments of the present invention will be described in further detail.

Positive electrode active material

According to one aspect of the present invention, a positive electrode active material including a lithium manganese-based oxide in which a phase belonging to a C2/m space group and a phase belonging to an R3-m space group are dissolved or complexed is provided.

Here, the lithium manganese-based oxide may be divided into a first lithium manganese-based oxide as a small particle and a second lithium manganese-based oxide as large particle on the basis of an average particle diameter, and the positive electrode active material defined herein is a bimodal-type positive electrode active material including a first lithium manganese-based oxide as a small particle and a second lithium manganese-based oxide as a large particle.

The lithium manganese-based oxide is also referred to as an overlithiated layered oxide (OLO) because the content of lithium present in the lithium manganese-based oxide is greater than the sum of the contents of other transition metals (generally, when the molar ratio (Li/Metal molar ratio) of lithium to all metal elements, other than lithium in the lithium manganese-based oxide is higher than 1).

In addition, the lithium manganese-based oxide includes at least one selected from nickel, cobalt and manganese. That is, the first lithium manganese-based oxide and the second lithium manganese-based oxide each independently include at least one selected from nickel, cobalt and manganese.

Generally, considering that the content of manganese among all metal elements except lithium is 20 mol% or less in a commercially-available ternary lithium composite oxide with a nickel-cobalt-manganese (NCM) or nickel-cobalt-aluminum (NCA) composition, the lithium manganese-based oxide has a relatively high proportion of manganese (e.g, 50 mol% or more, and preferably, 55 to 75 mol%) among all metal elements relative to the commercially-available ternary lithium composite oxide.

In addition, considering that the content of nickel among all metal elements except lithium is 60 mol% or more (in the case of a high-Ni type, 80 mol% or more) in a commercially-available ternary lithium composite oxide with a nickel-cobalt-manganese (NCM) or nickel-cobalt-aluminum (NCA) composition, the lithium manganese-based oxide has a relatively low proportion (e.g., less than 50 mol%, and preferably, 25 to 45 mol%) of nickel among all metal elements relative to the commercially-available ternary lithium composite oxide.

The Li/Metal molar ratio measured from the lithium manganese-based oxide defined herein also has a difference in that it is higher than that of a ternary lithium composite oxide such as nickel-cobalt-manganese (NCM) or nickel-cobalt-aluminum (NCA). For example, the Li/Metal molar ratio of the ternary lithium composite oxide such as nickel-cobalt-manganese (NCM) or nickel-cobalt-aluminum (NCA) has a value almost close to 1. On the other hand, the Li/Metal molar ratio of the lithium manganese-based oxide defined herein may have a value higher than 1, and preferably, a value of 1.1 to 1.7.

Despite the difference in composition described above, the lithium manganese-based oxide may also serve as a composite metal oxide capable of intercalation/deintercalation of lithium ions.

In one embodiment, the first lithium manganese-based oxide and the second lithium manganese-based oxide include a secondary particle formed by aggregating a plurality of primary particles.

Specifically, the first lithium manganese-based oxide and the second lithium manganese-based oxide each independently include at least one type of secondary particle selected from a secondary particle formed by aggregating a plurality of large-diameter primary particles and a secondary particle formed by aggregating a plurality of small-diameter primary particles.

In the present invention, the small-diameter primary particle and the large-diameter primary particle may be classified based on the average value of the minor axis lengths of the primary particles.

The terms "small diameter" and "large diameter" used herein are terms of the relative concepts used to describe the size of a primary particle constituting a secondary particle. Accordingly, the terms "small diameter" and "large diameter" should be understood as having a meaning distinguished from "small particle" and "large particle."

When the first lithium manganese-based oxide or the second lithium manganese-based oxide each independently include secondary particles with different primary particle sizes, a primary particle constituting a secondary particle formed by aggregating primary particles with a relatively small average particle diameter among the secondary particles may be referred to as a "small-diameter primary particle." In contrast, a primary particle constituting a secondary particle formed by aggregating primary particles with a relatively large average particle diameter among the secondary particles may be referred to as a "large-diameter primary particle."

The small-diameter primary particle and the large-diameter primary particle may have various shapes in the range defined herein.

The conventional overlithiated lithium manganese-based oxide generally has a form of a secondary particle in which a plurality of primary particles are aggregated, generally primary particles with an average particle diameter of several to tens of nanometers.

On the other hand, the primary particles constituting the lithium manganese-based oxide defined herein may have an average particle diameter of 0.05 to 5 $\mu$m, and preferably, 0.05 to 1.0 $\mu$m. More specifically, the small-diameter primary particle may have an average particle diameter of 0.05 to 5 $\mu$m, preferably, 0.05 to 1.0 $\mu$m, and more preferably, 0.10 to 0.50 $\mu$m, and the large-diameter primary particle may have an average particle diameter of 0.05 to 5 $\mu$m, preferably, 0.05 to 1.0 $\mu$m, and more preferably, 0.15 to 0.75 $\mu$m.

For example, when the first lithium manganese-based oxide includes both a secondary particle formed by aggregating a plurality of large-diameter primary particles and a secondary particle formed by aggregating a plurality of small-diameter primary particles, the average particle diameter of the large-diameter primary particles constituting a secondary particle formed by aggregating a plurality of large-diameter primary particles is larger than that of the small-diameter primary particles constituting a secondary particle formed by aggregating a plurality of small-diameter primary particles.

The major axis length of the primary particle, the minor axis length of the primary particle, a ratio of the major axis length and the minor axis length of the primary particle (major axis length/minor axis length) and the average particle diameter of the primary particles ([major axis length+minor axis length]/2) may be calculated with the average values of the major axis lengths and the minor axis lengths of the primary particles exposed on the surface of a secondary particle, which have been measured in advance.

For example, for the calculation, the average value of the results measured from all primary particles exposed on the surface of the secondary particle or the average value of the results measured from a plurality of primary particles selected from among the primary particles exposed on the surface of the secondary particle (e.g., or calculated from a plurality (e.g., 10 or 20 primary particles) of primary particles selected in the order from longest-to-shortest minor axis lengths from among the primary particles exposed on the surface of the secondary particle from the SEM image of the secondary particle) may be used.

When the average particle diameter of the primary particles is smaller than 0.1 $\mu$m, the specific surface area of the lithium manganese-based oxide (secondary particle) composed of the primary particles is relatively large. In this case, during the storage or operation of the lithium secondary battery, the possibility of causing side reactions between the lithium manganese-based oxide and a liquid electrolyte may increase.

On the other hand, when the average particle diameter of the primary particles is larger than 5 $\mu$m, as the growth of the primary particles is excessively induced, the diffusion path of lithium ions in the primary particles also becomes longer. When the diffusion path of lithium ions in the primary particles is excessively long, the mobility of lithium ions in the primary particles and the diffusivity of lithium ions mediated by the primary particles are degraded, which is a cause of increasing the resistance of the lithium manganese-based oxide (secondary particle) composed of the primary particles.

The first lithium manganese-based oxide may include only at least one type of secondary particle selected from secondary particles formed by aggregating a plurality of small-diameter primary particles, or only a secondary particle formed by aggregating a plurality of large-diameter primary particles, or a secondary particle formed by aggregating a plurality of large-diameter primary particles and a secondary particle formed by aggregating a plurality of small-diameter primary particles.

The second lithium manganese-based oxide may include only at least one type of secondary particle selected from secondary particles formed by aggregating a plurality of small-diameter primary particles, or only a secondary particle formed by aggregating a plurality of large-diameter primary particles, or a secondary particle formed by aggregating a plurality of large-diameter primary particles and a secondary particle formed by aggregating a plurality of small-diameter primary particles.

Here, as at least one selected from the first lithium manganese-based oxide and the second lithium manganese-based oxide includes a secondary particle formed by aggregating a plurality of large-diameter primary particles, the energy density per unit volume of the bimodal-type positive electrode active material defined herein may be improved.

In one embodiment, in the first lithium manganese-based oxide, a secondary particle formed by aggregating a plurality of large-diameter primary particles and a secondary particle formed by aggregating a plurality of small-diameter primary particles may be included in a weight ratio of 10:90 to 100:0. Here, the average value of the minor axis lengths of the small-diameter primary particles is smaller than that of the large-diameter primary particles.

The average value of the minor axis lengths of the large-diameter primary particles may be 100 or more and 500 nm or less, and preferably, 150 nm or more and 400 nm or less. As described above, as the average value of the minor axis lengths of the large-diameter primary particle, the average value of the minor axis lengths measured from all primary particles exposed on the surface of the secondary particle formed by aggregating a plurality of large-diameter primary particles or a plurality (e.g., 10 or 20 primary particles) of primary particles selected in the order from longest-to-shortest minor axis lengths from among of the primary particles exposed on the surface of the secondary particle formed by aggregating a plurality of large-diameter primary particles may be used.

When the average value of the minor axis lengths of the large-diameter primary particles is smaller than 100 nm, the particle size is substantially similar to that of the small-diameter primary particle, and thus the degree of improving the energy density per unit volume may be insignificant even using a secondary particle formed by aggregating a plurality of large-diameter primary particles and a secondary particle formed by aggregating a plurality of small-diameter primary particles.

On the other hand, that the average value of the minor axis lengths of the large-diameter primary particles is higher than 500 nm means that the overall growth of the large-diameter primary particle is excessively induced. As the growth of the primary particle is unnecessarily promoted, the mobility of lithium ions in the primary particles and the diffusivity of lithium ions mediated by the primary particles are likely to be degraded.

In addition, in terms of reducing the deviation of the minor axis lengths of the large-diameter primary particles exposed on the surface of the secondary particle, the minimum value of the minor axis length measured for the large-diameter primary particle exposed on the surface of the secondary particle may be 50 nm or more, preferably, 80 nm or more, and the maximum value of the minor axis length measured for the large-diameter primary particle exposed on the surface of the secondary particle may be 1 $\mu$m or more, preferably, 750 nm or less, and more preferably, 500 nm or less. As the deviation of the minor axis lengths of the large-diameter primary particles exposed on the surface of the secondary particle is smaller, it is possible to uniformly maintain the surface kinetics of the secondary particle.

The average value of the minor axis lengths of the small-diameter primary particles may be 50 nm or more and 300 nm or less, and preferably, 60 nm or more and 200 nm or less. As described above, as the average value of the minor axis lengths of the small-diameter primary particle, the average value of the minor axis lengths measured from all primary particles exposed on the surface of the secondary particle formed by aggregating a plurality of small-diameter primary particles or a plurality (e.g., 10 or 20 primary particles) of primary particles selected in the order from longest-to-shortest minor axis lengths from among of the primary particles exposed on the surface of the secondary particle formed by aggregating a plurality of large-diameter primary particles may be used.

When the average value of the minor axis length of the small-diameter primary particle is smaller than 50 nm, the specific surface area of a secondary particle composed of the small-diameter primary particles relatively increases, and thus the possibility of side reactions occurring between the lithium manganese-based oxide and a liquid electrolyte during the storage or operation of the lithium secondary battery may increase.

On the other hand, when the average value of the minor axis length of the small-diameter primary particle is larger than 300 nm, the particle size is substantially similar to the large-diameter primary particle, and thus the degree of improving the energy density per unit volume may be insignificant even using a secondary particle formed by aggregating a plurality of large-diameter primary particles and a secondary particle formed by aggregating a plurality of small-diameter primary particles.

In addition, in terms of reducing the deviation of the minor axis lengths of the small-diameter primary particles exposed on the surface of the secondary particle, the minimum value of the minor axis length measured for the small-diameter primary particle exposed on the surface of the secondary particle may be 20 nm or more, and preferably, 40 nm or more, and the maximum value of the minor axis length measured for the small-diameter primary particle exposed on the surface of the secondary particle may be 500 nm or less, and preferably, 300 nm or less. As the deviation of the minor axis lengths of the small-diameter primary particles exposed on the surface of the secondary particle is smaller, it is possible to uniformly maintain the surface kinetics of the secondary particle.

Despite the difference in size of the primary particle, the difference in average particle diameter between a secondary particle formed by aggregating a plurality of large-diameter primary particles and a secondary particle formed by aggregating a plurality of small-diameter primary particles may be insignificant. For example, when the number of primary particles constituting a secondary particle formed by aggregating a plurality of large-diameter primary particles is smaller than the number of primary particles constituting a secondary particle formed by aggregating a plurality of small-diameter primary particles, the average particle diameters of a secondary particle formed by aggregating a plurality of large-diameter primary particles and a secondary particle formed by aggregating a plurality of small-diameter primary particles may be similar to each other.

That is, a secondary particle formed by aggregating a plurality of large-diameter primary particles and a secondary particle formed by aggregating a plurality of small-diameter primary particles, which constitute the first lithium manganese-based oxide, have an average particle diameter of 2 to 5 $\mu$m.

In addition, the interparticle porosity between the primary particles measured from the cross-sectional SEM image of the secondary particle formed by aggregating large-diameter primary particles is preferably smaller than that of the secondary particle formed by aggregating small-diameter primary particles.

Specifically, the interparticle porosity between the primary particles measured from the cross-sectional SEM image of the secondary particle formed by aggregating large-diameter primary particles may be 10% or less, and preferably, 5% or less.

In addition, when the distance from the center to surface of the secondary particle, set from the cross-sectional SEM image of the secondary particle, is r, and a region with a distance from the center of the secondary particle of 0.5r to 1.0r is an external bulk region, the porosity in the external bulk region between the primary particles measured from the cross-sectional SEM image of the secondary particle formed by aggregating large-diameter primary particles may be smaller than that of secondary particles formed by aggregating the small-diameter primary particles.

Specifically, the porosity in the external bulk region measured from the cross-sectional SEM image of a secondary particle formed by aggregating large-diameter primary particles may be 1% or less, and preferably, 0.5% or less.

As the voids between the large-diameter primary particles in the secondary particle formed by aggregating large-diameter primary particles decrease, the energy density per unit volume of the first lithium manganese-based oxide, and further, a bimodal-type positive electrode active material including the first lithium manganese-based oxide may be improved.

That is, in the bimodal-type positive electrode active material, some of the secondary particles formed by aggregating a plurality of small-diameter primary particles, which constitute the first lithium manganese-based oxide, may be replaced with secondary particles formed by aggregating a plurality of large-diameter primary particles, or the first lithium manganese-based oxide may be allowed to include only secondary particles formed by aggregating a plurality of large-diameter primary particles, and therefore, the energy density per unit volume thereof may be further improved compared to the a bimodal-type positive electrode active material in which small and large particles simply coexist.

In one embodiment, in the second lithium manganese-based oxide, a secondary particle formed by aggregating a plurality of large-diameter primary particles and a secondary particle formed by aggregating a plurality of small-diameter primary particles may be included in a weight ratio of 10:90 to 100:0. Here, the average value of the minor axis lengths of the small-diameter primary particles is smaller than that of the large-diameter primary particles.

The average value of the minor axis lengths of the large-diameter primary particles may be 100 nm or more and 500 nm or less, and preferably, 130 nm or more and 400 nm or less. As described above, as the average value of the minor axis lengths of the large-diameter primary particle, the average value of the minor axis lengths measured from all primary particles exposed on the surface of the secondary particle formed by aggregating a plurality of large-diameter primary particles or a plurality (e.g., 10 or 20 primary particles) of primary particles selected in the order from longest-to-shortest minor axis lengths from among of the primary particles exposed on the surface of the secondary particle formed by aggregating a plurality of large-diameter primary particles may be used.

When the average value of the minor axis lengths of the large-diameter primary particles is smaller than 100 nm, the particle size is substantially similar to that of the small-diameter primary particle, and thus the degree of improving the energy density per unit volume may be insignificant even using a secondary particle formed by aggregating a plurality of large-diameter primary particles and a secondary particle formed by aggregating a plurality of small-diameter primary particles.

On the other hand, that the average value of the minor axis lengths of the large-diameter primary particles is higher than 500 nm means that the overall growth of the large-diameter primary particle is excessively induced. As the growth of the primary particle is unnecessarily promoted, the mobility of lithium ions in the primary particles and the diffusivity of lithium ions mediated by the primary particles are likely to be degraded.

In addition, in terms of reducing the deviation of the minor axis lengths of the large-diameter primary particles exposed on the surface of the secondary particle, the minimum value of the minor axis length measured for the large-diameter primary particle exposed on the surface of the secondary particle may be 50 nm or more, preferably, 75 nm or more, and the maximum value of the minor axis length measured for the large-diameter primary particle exposed on the surface of the secondary particle may be 1 $\mu$m or more, preferably, 750 nm or less, and more preferably, 500 nm or less. As the deviation of the minor axis lengths of the large-diameter primary particles exposed on the surface of the secondary particle is smaller, it is possible to uniformly maintain the surface kinetics of the secondary particle.

The average value of the minor axis lengths of the small-diameter primary particles may be 50 nm or more and 300 nm or less, and preferably, 60 nm or more and 200 nm or less. As described above, as the average value of the minor axis lengths of the small-diameter primary particle, the average value of the minor axis lengths measured from all primary particles exposed on the surface of the secondary particle formed by aggregating a plurality of small-diameter primary particles or a plurality (e.g., 10 or 20 primary particles) of primary particles selected in the order from longest-to-shortest minor axis lengths from among of the primary particles exposed on the surface of the secondary particle formed by aggregating a plurality of large-diameter primary particles may be used.

When the average value of the minor axis length of the small-diameter primary particle is smaller than 50 nm, the specific surface area of a secondary particle composed of the small-diameter primary particles relatively increases, and thus the possibility of side reactions occurring between the lithium manganese-based oxide and a liquid electrolyte during the storage or operation of the lithium secondary battery may increase.

On the other hand, when the average value of the minor axis length of the small-diameter primary particle is larger than 300 nm, the particle size is substantially similar to the large-diameter primary particle, and thus the degree of improving the energy density per unit volume may be insignificant even using a secondary particle formed by aggregating a plurality of large-diameter primary particles and a secondary particle formed by aggregating a plurality of small-diameter primary particles.

In addition, in terms of reducing the deviation of the minor axis lengths of the small-diameter primary particles exposed on the surface of the secondary particle, the minimum value of the minor axis length measured for the small-diameter primary particle exposed on the surface of the secondary particle may be 20 nm or more, and preferably, 40 nm or more, and the maximum value of the minor axis length measured for the small-diameter primary particle exposed on the surface of the secondary particle may be 500 nm or less, and preferably, 300 nm or less. As the deviation of the minor axis lengths of the small-diameter primary particles exposed on the surface of the secondary particle is smaller, it is possible to uniformly maintain the surface kinetics of the secondary particle.

Despite the difference in size of the primary particle, the difference in average particle diameter between a secondary particle formed by aggregating a plurality of large-diameter primary particles and a secondary particle formed by aggregating a plurality of small-diameter primary particles may be insignificant. For example, when the number of primary particles constituting a secondary particle formed by aggregating a plurality of large-diameter primary particles is smaller than the number of primary particles constituting a secondary particle formed by aggregating a plurality of small-diameter primary particles, the average particle diameters of a secondary particle formed by aggregating a plurality of large-diameter primary particles and a secondary particle formed by aggregating a plurality of small-diameter primary particles may be similar to each other.

In addition, the interparticle porosity between the primary particles measured from the cross-sectional SEM image of the secondary particle formed by aggregating large-diameter primary particles is preferably smaller than that of the secondary particle formed by aggregating small-diameter primary particles.

Specifically, the interparticle porosity between the primary particles measured from the cross-sectional SEM image of the secondary particle formed by aggregating large-diameter primary particles may be 15% or less, preferably, 10% or less, and more preferably 5% or less.

In addition, when the distance from the center to surface of the secondary particle, set from the cross-sectional SEM image of the secondary particle, is r, and a region with a distance from the center of the secondary particle of 0.5r to 1.0r is an external bulk region, the porosity in the external bulk region measured from the cross-sectional SEM image of the secondary particle formed by aggregating large-diameter primary particles may be smaller than that of secondary particles formed by aggregating the small-diameter primary particles.

Specifically, the porosity in the external bulk region measured from the cross-sectional SEM image of the secondary particle formed by aggregating large-diameter primary particles may be 1% or less, and preferably 0.5% or less.

As the voids between the large-diameter primary particles in the secondary particle formed by aggregating large-diameter primary particles decrease, the energy density per unit volume of the first lithium manganese-based oxide, and further, a bimodal-type positive electrode active material including the first lithium manganese-based oxide may be improved.

That is, in the bimodal-type positive electrode active material, some of the secondary particles formed by aggregating a plurality of small-diameter primary particles, which constitutes the first lithium manganese-based oxide may be replaced with secondary particles formed by aggregating a plurality of large-diameter primary particles, or the first lithium manganese-based oxide may be allowed to include only secondary particles formed by aggregating a plurality of large-diameter primary particles, and therefore, the energy density per unit volume thereof may be further improved compared to the a bimodal-type positive electrode active material in which small and large particles simply coexist.

As the difference in average particle diameter between the second lithium manganese-based oxide and the first lithium manganese-based oxide may be 3 $\mu$m or more, and preferably, 4 $\mu$m or more, the energy density per unit volume of the bimodal positive electrode active material may increase.

Here, the average particle diameter calculated by the average value of a length in a major axis direction and a length in a minor axis direction of the first lithium manganese-based oxide ([major axis length+minor axis length]/2) may be 2 to 5 $\mu$m, and the average particle diameter calculated by the average value of a length in a major axis direction and a length in a minor axis direction of the second lithium manganese-based oxide may be 6 to 14 $\mu$m.

As described above, the terms "small particle" and "large particle" used herein are terms of relative concept used to describe the sizes of secondary particles, and in the present invention, it should be understood that the term "small particle" refers to a first lithium manganese-based oxide, and the term "large particle" refers to a second lithium manganese-based oxide.

In addition, to maximize the energy density per unit volume of a bimodal positive electrode active material, in the positive electrode active material, the first lithium manganese-based oxide and the second lithium manganese-based oxide are preferably included in a weight ratio of 10:90 to 80:20.

The first lithium manganese-based oxide may be present while being filled in voids in the second lithium manganese-based oxide, attached to the surface of the second lithium manganese-based oxide, or present in an aggregate of particles of the first lithium manganese-based oxide.

In the positive electrode active material, when the ratio of the first lithium manganese-based oxide to the second lithium manganese-based oxide is excessively small, it may be difficult to sufficiently fill a void formed in the second lithium manganese-based oxide with the first lithium manganese-based oxide.

On the other hand, in the positive electrode active material, when the ratio of the first lithium manganese-based oxide to the second lithium manganese-based oxide is excessively large, the energy density per unit volume of the positive electrode active material may be degraded.

The first lithium manganese-based oxide and the second lithium manganese-based oxide, which defined herein, may each be independently represented by Formula 1 below.

[Formula 1] $rLi_2MnO_{3-b'}X_{b'}\cdot(1-r)Li_aM1_xM2_yM3_zO_{2-b}X_b$

Wherein,

M1 is at least one selected from Ni and Mn,
M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
M3 is at least one selected from W, Mo and Nb,
M1 to M3 do not overlap with each other,
X and X' are halogens that can substitute for at least some of the oxygens present in the lithium manganese-based oxide,
$0<r\leq0.7$, $0<a\leq1$, $0\leq b\leq0.1$, $0\leq b'\leq0.1$, $0<x\leq1$, $0\leq y<1$, $0\leq z\leq0.1$, and $0<x+y+z\leq1$.

In Formula 1, when M1 is Ni, M2 may include Mn, and when M1 is Mn, M2 may include Ni. In addition, when M1 is Ni and Mn, M2 is not present, or if present, M2 may be an element other than Ni and Mn.

For the types of halogens that can be used as X and X', refer to the periodic table, and F, Cl, Br and/or I may be used, and preferably, F may be used.

In one embodiment, to synthesize the secondary particle formed by aggregating large-diameter primary particles, a method of doping a metal cation dopant and/or a halogen anion dopant into an oxide precursor while inducing the growth of the primary particle during calcination of the oxide precursor of the lithium manganese-based oxide may be used.

Here, the metal cation dopant may include at least one selected from W, Mo and Nb, and the halogen anion dopant may include fluorine.

In Formula 1, the metal cation dopant is denoted by M3, and the halogen anion dopant is denoted by X.

As described above, when a halogen is doped to induce the growth of primary particles constituting the lithium manganese-based oxide, at least some of the oxygens present in the lithium manganese-based oxide are preferably substituted with a halogen.

When an over-calcinating method for performing thermal treatment at a relatively high temperature is used without halogen doping to induce the growth of the primary particles constituting the lithium manganese-based oxide, although the growth of the primary particles is possible, the crystal structure of the primary particle is damaged and thus the early deterioration of the positive electrode active material can occur.

When fluorine is used as an anion dopant in the growth of the primary particles, the growth of the primary particles may be induced within the range of mitigating the degradation in the diffusivity of lithium ions mediated by the primary particles.

For fluorine doping of the primary particle, at least one anion dopant selected from $LiF$, $MgF_2$, $HF$, $F_2$, $XeF_2$, $TbF_4$, $CeF_4$, $CoF_3$, $AgF_2$, $MoF_3$, $AgF$, $CuF_2$, $FeF_3$, $CuF$, $VF_3$, $CrF_3$, $ZrF_4$, $BaF_2$, $CaF_2$, $AlF_3$, $NH_4F$, $CeF_3$ and $CsF$, and preferably, at least one anion dopant selected from $LiF$ and $MgF_2$ may be used.

When co-doping is induced by additionally using an M3-containing dopant in addition to the above-described anion dopant during the calcination of the oxide precursor, the primary particles may be almost grown in a spherical shape, instead of being grown in a plate shape.

As the M3-containing dopant, at least one selected from a hydroxide, an oxide, a carbonate, a nitride, a sulfide, and a phosphate, including at least one element selected from tungsten, molybdenum and niobium may be used.

As described above, when co-doping of the primary particle and the growth of the primary particles are induced using the combination of the above-described anion dopant and M3-containing dopant during the calcination of the oxide precursor, it is possible to make the shape of the primary particle close to a spherical shape and reduce the porosity of the secondary particle formed by aggregating the primary particles at the same time.

When the porosity in the lithium manganese-based oxide is reduced, insufficient electrochemical properties of the positive electrode active material including the lithium manganese-based oxide may be compensated for by increasing capacity per unit volume.

In addition, when the co-doping of the primary particle and the growth of the primary particles are induced using the combination of the above-described anion dopant and M3-containing dopant during the calcination of the oxide precursor, it may be effective in reducing the porosity particularly in the surface portion of the secondary particle.

The lithium manganese-based oxide represented by Formula 1 may selectively include cobalt. When the lithium manganese-based oxide includes cobalt, the mole fraction of the cobalt relative to the number of moles of total metal elements in the lithium manganese-based oxide may be 20% or less, preferably, 15% or less, and more preferably, 10% or less. In another case, the lithium manganese-based oxide represented by Formula 1 may have a cobalt-free composition, which does not include cobalt.

The Li/Metal molar ratio measured from the lithium manganese-based oxide represented by Formula 1 may be more than 1, and preferably, 1.1 to 1.7. When the Li/Metal molar ratio measured from the lithium manganese-based oxide has a value higher than at least 1, it is possible to form an overlithiated lithium manganese-based oxide. In addition, in order for the lithium manganese-based oxide to properly form a solid solution in which a phase belonging to a C2/m space group and a phase belonging to a R3-m space group are dissolved or complexed and exhibit a high capacity under a high-voltage operating environment, the Li/Metal molar ratio of the lithium manganese-based oxide is preferably 1.1 to 1.7.

In addition, to properly form a solid solution in which a phase belonging to a C2/m space group and a phase belonging to a R3-m space group are dissolved or complexed, the content of manganese among all metal elements excluding lithium, present in the lithium manganese-based oxide represented by Formula 1 is preferably 50 mol% or more. In order for the lithium manganese-based oxide to have the characteristics of OLO exhibiting a high capacity under a high-voltage operating environment, the content of manganese among all metal elements excluding lithium, present in the lithium manganese-based oxide represented by Formula 1 is more preferably 50 mol% or more and less than 80 mol%, and even more preferably, 55 to 75 mol%. When the content of manganese in the lithium manganese-based oxide is more than 80 mol%, a phase transition may occur due to the migration of a transition metal (particularly, manganese) in the lithium manganese-based oxide during formation and/or operation of a lithium secondary battery. Such a phase transition forms a spinel phase, and the spinel phase acting as an impurity in the lithium manganese-based oxide may induce a decrease in charge/discharge capacities or voltage decay during the cycling of a lithium secondary battery.

To properly form a solid solution in which a phase belonging to a C2/m space group and a phase belonging to a R3-m space group are dissolved or complexed, the content of nickel among all metal elements excluding lithium, present in the lithium manganese-based oxide represented by Formula 1, is preferably less than 50 mol%.

When the content of nickel in the lithium manganese-based oxide is 50 mol% or more, since it is difficult to sufficiently form the C2/m phase, or the phase belonging to the C2/m space group and the phase belonging to the R3-m space group do not sufficiently form a solid solution, phase separation may be caused during formation and/or operation of a lithium secondary battery.

Generally, in a commercialized ternary lithium composite oxide with a nickel-cobalt-manganese (NCM) or nickel-cobalt-aluminum (NCA) composition, the phase belonging to the R3-m space group is present in a single phase.

On the other hand, the overlithiated lithium manganese-based oxide represented by Formula 1 is present as a composite oxide in which an oxide of the phase belonging to the C2/m space group (hereinafter, referred to as "C2/m phase") represented by $rLi_2MnO_{3-b'}X'_{b'}$ and an oxide of the phase belonging to the R3-m space group (hereinafter, referred to as "R3-m phase") represented by $(1-r)Li_aM1_xM2_yM3_zO_{2-b}X_b$ are dissolved or complexed. For example, the lithium manganese-based oxide may be present in a state in which the C2/m-phase oxide and the R3-m-phase oxide form a solid solution.

Here, a composite oxide in which the phase belonging to the C2/m space group and the phase belonging to the R3-m space group are simply physically and/or chemically bonded or attached does not correspond to the solid solution defined therein.

For example, a composite oxide having the phase belonging to the C2/m space group whose surface is coated with a metal oxide with the phase belonging to the R3-m space group by mixing a metal oxide having the phase belonging to the C2/m space group and the metal oxide with the phase belonging to the R3-m space group does not correspond to the solid solution defined herein.

In the lithium manganese-based oxide represented by Formula 1, when r is more than 0.7, since the proportion of $Li_2MnO_{3-b'}X'_{b'}$, which is a C2/m phase oxide, in the lithium manganese-based oxide is excessively large, the content of manganese in the positive electrode active material is excessively high, which may lower the discharge capacity. That is, to improve surface kinetics by sufficiently activating a C2/m-phase oxide with relatively high resistance in the lithium manganese-based oxide, the R3-m phase oxide is preferably present in a predetermined proportion or more.

Lithium secondary battery

According to another aspect of the present invention, a positive electrode including a positive electrode current collector and a positive electrode active material layer formed on the positive electrode current collector may be provided. Here, the positive electrode active material layer may include any of the above-described positive electrode active materials prepared by the preparation methods according to various embodiments of the present invention as a positive electrode active material.

Accordingly, a detailed description of the lithium manganese-based oxide will be omitted, and only the remaining components not described above will be described below. In addition, hereinafter, the above-described lithium manganese-based oxide is referred to as a positive electrode active material for convenience.

The positive electrode current collector is not particularly limited as long as it does not cause a chemical change in a battery and has conductivity, and for example, stainless steel, aluminum, nickel, titanium, calcined carbon, or aluminum or stainless steel whose surface is treated with carbon, nickel, titanium or silver may be used. In addition, the positive electrode current collector may conventionally have a thickness of 3 to 500 μm, and fine irregularities may be formed on the surface of the current collector, thereby increasing the adhesive strength of a positive electrode active material. For example, the positive electrode current collector may be used in various forms such as a film, a sheet, a foil, a net, a porous body, foam, a non-woven fabric, etc.

The positive electrode active material layer may be prepared by coating the positive electrode current collector with a positive electrode slurry composition including the positive electrode active material, a conductive material, and a binder included optionally as needed.

Here, the positive electrode active material is included at 80 to 99 wt%, and specifically, 85 to 98.5 wt% with respect to the total weight of the positive electrode active material layer. When the positive electrode active material is included in the above content range, excellent capacity characteristics may be exhibited, but the present invention is not limited thereto.

The conductive material is used to impart conductivity to an electrode, and is not particularly limited as long as it has electron conductivity without causing a chemical change in a battery. A specific example of the conductive material may be graphite such as natural graphite or artificial graphite; a carbon-based material such as carbon black, acetylene black, Ketjen black, channel black, furnace black, lamp black, thermal black or a carbon fiber; a metal powder or metal fiber consisting of copper, nickel, aluminum, or silver; a conductive whisker consisting of zinc oxide or potassium titanate; a conductive metal oxide such as titanium oxide; or a conductive polymer such as a polyphenylene derivative, and one or a mixture of two or more thereof may be used. The conductive material may be generally contained at 0.1 to 15 wt% with respect to the total weight of the positive electrode active material layer.

The binder serves to improve attachment between particles of the positive electrode active material and the adhesive strength between the positive electrode active material and a current collector. A specific example of the binder may be polyvinylidene fluoride (PVDF), a vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, tetrafluoroethylene, polyethylene, polypropylene, an ethylene-propylene-diene polymer (EPDM), a sulfonated EPDM, styrene butadiene rubber (SBR), fluorine rubber, or various copolymers thereof, and one or a mixture of two or more thereof may be used. The binder may be included at 0.1 to 15 wt% with respect to the total weight of the positive electrode active material layer.

The positive electrode may be manufactured according to a conventional method of manufacturing a positive electrode, except that the above-described positive electrode active material is used. Specifically, the positive electrode may be manufactured by coating the positive electrode current collector with a positive electrode slurry composition prepared by dissolving or dispersing the positive electrode active material, and optionally, a binder and a conductive material in a solvent, and drying and rolling the resulting product.

The solvent may be a solvent generally used in the art, and may be dimethyl sulfoxide (DMSO), isopropyl alcohol, N-methylpyrrolidone (NMP), acetone or water, and one or a mixture of two or more thereof may be used. In consideration of the coating thickness and production yield of a slurry, the solvent is used at a sufficient amount for dissolving or dispersing the positive electrode active material, the conductive material and the binder and then imparting a viscosity for exhibiting excellent thickness uniformity when the slurry is applied to prepare a positive electrode.

In addition, in another exemplary embodiment, the positive electrode may be prepared by casting the positive electrode slurry composition on a separate support, and laminating a film obtained by delamination from the support on the positive electrode current collector.

Moreover, still another aspect of the present invention provides an electrochemical device including the above-described positive electrode. The electrochemical device may be, specifically, a battery, a capacitor, and more specifically, a lithium secondary battery.

The lithium secondary battery may specifically include a positive electrode, a negative electrode disposed opposite to the positive electrode, and a separator film and a liquid electrolyte, which are interposed between the positive electrode and the negative electrode. Here, since the positive electrode is the same as described above, for convenience, detailed description for the positive electrode will be omitted, and other components which have not been described below will be described in detail.

The lithium secondary battery may further include a battery case accommodating an electrode assembly of the positive electrode, the negative electrode and the separator film, and optionally, a sealing member for sealing the battery case.

The negative electrode may include a negative electrode current collector and a negative electrode active material layer disposed on the negative electrode current collector.

The negative electrode current collector is not particularly limited as long as it has high conductivity without causing a chemical change in a battery, and may be, for example, copper, stainless steel, aluminum, nickel, titanium, calcined carbon, or copper or stainless steel whose surface is treated with carbon, nickel, titanium or silver, or an aluminum-cadmium alloy. In addition, the negative electrode current collector may generally have a thickness of 3 to 500 μm, and like the positive electrode current collector, fine irregularities may be formed on the current collector surface, thereby enhancing the binding strength of the negative electrode active material. For example, the negative electrode current collector may be used in various forms such as a film, a sheet, a foil, a net, a porous body, foam, a non-woven fabric, etc.

The negative electrode active material layer may be formed by coating the negative electrode current collector with a negative electrode slurry composition including the negative electrode active material, a conductive material, and a binder optionally included as needed.

As the negative electrode active material, a compound enabling the reversible intercalation and deintercalation of lithium may be used. A specific example of the negative electrode active material may be a carbonaceous material such as artificial graphite, natural graphite, graphitized carbon fiber or amorphous carbon; a metallic compound capable of alloying with lithium, such as Si, Al, Sn, Pb, Zn, Bi, In, Mg, Ga, Cd, a Si alloy, a Sn alloy or an Al alloy; a metal oxide capable of doping and dedoping lithium such as $SiO_\beta$ ($0<\beta<2$), $SnO_2$, vanadium oxide, or lithium vanadium oxide; or a composite including the metallic compound and the carbonaceous material such as a Si-C composite or a Sn-C composite, and any one or a mixture of two or more thereof may be used. In addition, as the negative electrode active material, a metal lithium thin film may be used. In addition, as a carbon material, both low-crystalline carbon and high-crystalline carbon may be used. Representative examples of the low-crystalline carbon include soft carbon and hard carbon, and representative examples of the high-crystalline carbon include amorphous, sheet-type, flake-type, spherical or fiber-type natural or artificial graphite, Kish graphite, pyrolytic carbon, mesophase pitch-based carbon fiber, meso-carbon microbeads, mesophase pitches, and high-temperature calcined carbon such as petroleum or coal tar pitch derived cokes.

The negative electrode active material may be included at 80 to 99 wt% with respect to the total weight of the negative electrode active material layer.

The binder is a component aiding bonding between a conductive material, an active material and a current collector, and may be generally added at 0.1 to 10 wt% with respect to the total weight of the negative electrode active material layer. Examples of the binder may include polyvinylidene fluoride (PVDF), polyvinyl alcohol, carboxymethylcellulose (CMC), starch, hydroxypropylcellulose, regenerated cellulose, polyvinylpyrrolidone, tetrafluoroethylene, polyethylene, polypropylene, ethylene-propylene-diene polymer (EPDM), sulfonated-EPDM, styrene butadiene rubber, nitrilebutadiene rubber, fluorine rubber, and various copolymers thereof.

The conductive material is a component for further improving conductivity of the negative electrode active material, and may be added at 10 wt% or less, and preferably, 5 wt% or less with respect to the total weight of the negative electrode active material layer. The conductive material is not particularly limited as long as it does not cause a chemical change in the battery, and has conductivity, and may be, for example, graphite such as natural graphite or artificial graphite; carbon black such as acetylene black, Ketjen black, channel black, furnace black, lamp black or thermal black; a conductive fiber such as a carbon fiber or a metal fiber; a metal powder such as fluorinated carbon, aluminum, or nickel powder; a conductive whisker such as zinc oxide or potassium titanate; a conductive metal oxide such as titanium oxide; or a conductive material such as a polyphenylene derivative.

In an exemplary embodiment, the negative electrode active material layer may be prepared by coating the negative electrode current collector with a negative electrode slurry composition prepared by dissolving or dispersing a negative electrode active material, and optionally, a binder and a conductive material in a solvent, and drying the coated composition, or may be prepared by casting the negative electrode slurry composition on a separate support and then laminating a film delaminated from the support on the negative electrode current collector.

Meanwhile, in the lithium secondary battery, a separator film is not particularly limited as long as it is generally used in a lithium secondary battery to separate a negative electrode from a positive electrode and provide a diffusion path for lithium ions, and particularly, the separator film has a low resistance to ion mobility of a liquid electrolyte and an excellent electrolyte solution impregnation ability. Specifically, a porous polymer film, for example, a porous polymer film prepared of a polyolefin-based polymer such as an ethylene homopolymer, a propylene homopolymer, an ethylene/butene copolymer, an ethylene/hexene copolymer and an ethylene/methacrylate copolymer, or a stacked structure including two or more layers thereof may be used. In addition, a conventional porous non-woven fabric, for example, a non-woven fabric formed of a high melting point glass fiber or a polyethylene terephthalate fiber may be used. In addition, a coated separator film including a ceramic component or a polymer material may be used to ensure thermal resistance or mechanical strength, and may be optionally used in a single- or multi-layered structure.

In addition, the electrolyte used in the present invention may be an organic electrolyte, an inorganic electrolyte, a solid polymer electrolyte, a gel-type polymer electrolyte, a solid inorganic electrolyte, or a molten-type inorganic electrolyte, which is able to be used in the production of a lithium secondary battery, but the present invention is not limited thereto.

Specifically, the electrolyte may include an organic solvent and a lithium salt.

The organic solvent is not particularly limited as long as it can serve as a medium enabling the transfer of ions involved in an electrochemical reaction of a battery. Specifically, the organic solvent may be an ester-based solvent such as methyl acetate, ethyl acetate, $\gamma$-butyrolactone, or $\varepsilon$-caprolactone; an ether-based solvent such as dibutyl ether or tetrahydrofuran; a ketone-based solvent such as cyclohexanone; an aromatic hydrocarbon-based solvent such as benzene or fluorobenzene; a carbonate-based solvent such as dimethyl carbonate (DMC), diethyl carbonate (DEC), methyl ethyl carbonate (MEC), ethyl methyl carbonate (EMC), ethylene carbonate (EC), or propylene carbonate (PC); an alcohol-based solvent such as ethyl alcohol or isopropyl alcohol; a nitrile-based solvent such as R-CN (R is a linear, branched or cyclic C2 to C20 hydrocarbon group, and may include a double bonded aromatic ring or an ether bond); an amide-based solvent such as dimethylformamide; a dioxolane-based solvent such as 1,3-dioxolane; or a sulfolane-based solvent. Among these, a carbonate-based solvent is preferably used, and a mixture of a cyclic carbonate (for example, ethylene carbonate or propylene carbonate) having high ion conductivity and high permittivity to increase the charging/discharging performance of a battery and a low-viscosity linear carbonate-based compound (for example, ethyl methyl carbonate, dimethyl carbonate or diethyl carbonate) is more preferably used. In this case, by using a mixture of a cyclic carbonate and a chain-type carbonate in a volume ratio of approximately 1:1 to 1:9, the electrolyte solution may exhibit excellent performance.

The lithium salt is not particularly limited as long as it is a compound capable of providing a lithium ion used in a lithium secondary battery. Specifically, the lithium salt may be $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, LiCl, LiI, or $LiB(C_2O_4)_2$. The concentration of the lithium salt is preferably in the range of 0.1 to 2.0M. When the concentration of the lithium salt is included in the above-mentioned range, the electrolyte has suitable conductivity and viscosity and thus can exhibit excellent electrolytic performance. Therefore, lithium ions can effectively migrate.

When the electrolyte used herein is a solid electrolyte, for example, a solid inorganic electrolyte such as a sulfide-based solid electrolyte, an oxide-based solid electrolyte, a nitride-based solid electrolyte, or a halide-based solid electrolyte may be used, and preferably, a sulfide-based solid electrolyte is used.

As a material for a sulfide-based solid electrolyte, a solid electrolyte containing Li, an X element (here, X is at least one selected from P, As, Sb, Si, Ge, Sn, B, Al, Ga and In) and S may be used. Examples of the sulfide-based solid electrolyte material may include $Li_2S-P_2S_5$, $Li_2S-P_2S-LiX$ (here, X is a halogen element such as I or Cl), $Li_2S-P_2S_5-Li_2O$, $Li_2S-P_2S_5-Li_2O-LiI$, $Li_2S-SiS_2$, $Li_2S-SiS_2-LiI$, $Li_2S-SiS_2-LiBr$, $Li_2S-SiS_2-LiCl$, $Li_2S-SiS_2-B_2S_3-LiI$, $Li_2S-SiS_2-P_2S_5-LiI$, $Li_2S-B_2S_3$, $Li_2S-P_2S_5-Z_mS_n$ (here, m and n are integers, and Z is Ge, Zn or Ga), $Li_2S-GeS_2$, $Li_2S-SiS_2-Li_3PO_4$, and $Li_2S-SiS_2-Li_pMO_q$ (here, p and q are integers, and M is P, Si, Ge, B, Al, Ga or In).

A solid electrolyte, and preferably, a sulfide-based solid electrolyte may be amorphous, crystalline, or a state in which an amorphous phase and crystalline phase are mixed.

Materials for an oxide-based solid electrolyte include $Li_7La_3Zr_2O_{12}$, $Li_{7-x}La_3Zr_{1-x}Nb_xO_{12}$, $Li_{7-3x}La_3Zr_2Al_xO_{12}$, $Li_{3x}La_{2/3-x}TiO_3$, $Li_{1+x}Al_xTi_{2-x}(PO_4)_3$, $Li_{1+x}Al_xGe_{2-x}(PO_4)_3$, $Li_3PO_4$, $Li_{3+x}PO_{4-x}N_x$ (LiPON), and $Li_{2+2x}Zn_{1-x}GeO_4$ (LISICON).

The above-described solid electrolyte may be disposed as a separate layer (solid electrolyte layer) between a positive electrode and a negative electrode. In addition, the solid electrolyte may be partially included in a positive electrode active material layer of the positive electrode independent of the solid electrolyte layer, or the solid electrolyte may be partially included in a negative electrode active material of the negative electrode independent of the solid electrolyte layer.

To enhance lifetime characteristics of the battery, inhibit a decrease in battery capacity, and enhance discharge capacity of the battery, the electrolyte may further include one or more types of additives, for example, a haloalkylene carbonate-based compound such as difluoroethylene carbonate, pyridine, triethylphosphite, triethanolamine, cyclic ether, ethylene diamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, in addition to the components of the electrolyte. Here, the additive(s) may be included at 0.1 to 5 wt% with respect to the total weight of the electrolyte.

Since the lithium secondary battery including the positive electrode active material according to the present invention stably exhibits excellent discharge capacity, excellent output characteristics and excellent lifetime characteristics, it is useful in portable devices such as a mobile phone, a notebook computer and a digital camera and an electric vehicle field such as a hybrid electric vehicle (HEV).

The outer shape of the lithium secondary battery according to the present invention is not particularly limited, but may be a cylindrical, prismatic, pouch or coin type using a can. In addition, the lithium secondary battery may be used in a battery cell that is not only used as a power source of a small device, but also preferably used as a unit battery for a medium-to-large battery module including a plurality of battery cells.

According to still another exemplary embodiment of the present invention, a battery module including the lithium secondary battery as a unit cell and/or a battery pack including the same is provided.

The battery module or the battery pack may be used as a power source of any one or more medium-to-large devices including a power tool; an electric motor vehicle such as an electric vehicle (EV), a hybrid electric vehicle, and a plug-in hybrid electric vehicle (PHEV); and a power storage system.

Hereinafter, the present invention will be described in further detail with reference to examples. However, these examples are merely provided to exemplify the present invention, and thus the scope of the present invention will not be construed not to be limited by these examples.

Preparation Example 1. Preparation of positive electrode active material

Preparation Example 1-1. Preparation of first lithium manganese-based oxide (A-1)

(a) Preparation of precursor

An aqueous solution in which $NiSO_4 \cdot 6H_2O$ and $MnSO_4 \cdot H_2O$ were mixed in a molar ratio of 40:60, NaOH and $NH_4OH$ were added to a reactor and stirred. The temperature in the reactor was maintained at 45 °C, and a $N_2$ gas was introduced into the reactor to perform a precursor synthesis reaction. After the reaction was completed, washing and dehydration were performed, thereby obtaining a hydroxide precursor (average particle diameter: 3.0 $\mu$m) with the composition of $Ni_{0.4}Mn_{0.6}(OH)_2$.

(b) First thermal treatment

An oxide-type precursor was obtained by raising the temperature of a calcination furnace with an $O_2$ atmosphere at a rate of 2 °C/min, thermally treating the hydroxide precursor obtained in (a) for 5 hours while maintaining the temperature at 550 °C, and performing furnace cooling.

(c) Second thermal treatment

A mixture was prepared by mixing the oxide-type precursor obtained in (b) and LiOH (Li/Metal molar ratio = 1.25) as a lithium raw material.
Subsequently, a first lithium manganese-based oxide (A-1) was obtained by raising the temperature of a calcination furnace with an $O_2$ atmosphere at a rate of 2 °C/min, maintaining the temperature at 900 °C, thermally treating the mixture for 8 hours, and performing furnace cooling.

Preparation Example 1-2. Preparation of first lithium manganese-based oxide (A-2)

(a) Preparation of precursor

An aqueous solution in which $NiSO_4 \cdot 6H_2O$ and $MnSO_4 \cdot H_2O$ were mixed in a molar ratio of 40:60, NaOH and $NH_4OH$ were added to a reactor and stirred. The temperature in the reactor was maintained at 45 °C, and a $N_2$ gas was introduced into the reactor to perform a precursor synthesis reaction. After the reaction was completed, washing and dehydration were performed, thereby obtaining a hydroxide precursor (average particle diameter: 3.0 $\mu$m) with the composition of $Ni_{0.4}Mn_{0.6}(OH)_2$.

(b) First thermal treatment

An oxide-type precursor was obtained by raising the temperature of a calcination furnace with an $O_2$ atmosphere at a rate of 2 °C/min, thermally treating the hydroxide precursor obtained in (a) for 5 hours while maintaining the temperature at 550 °C, and performing furnace cooling.

(c) Second thermal treatment

A mixture was prepared by mixing the precursor in an oxide state obtained in (b), LiOH (Li/Metal molar ratio = 1.25) as a lithium raw material, LiF in which the content of fluorine (F) was weighed to be 1.0 mol% based on metal elements excluding lithium in the precursor, and $WO_3$ in which the content of tungsten (W) was weighed to be 0.75 mol% based on metal elements excluding lithium in the precursor.
Subsequently, the temperature of a calcination furnace with an $O_2$ atmosphere was raised at a rate of 2 °C/min, the temperature was maintained at 900 °C, the mixture was thermally treated for 8 hours, and then furnace cooling was performed, thereby obtaining a first lithium manganese-based oxide (A-2).

Preparation Example 1-3. Preparation of second lithium manganese-based oxide (B-1)

(a) Preparation of precursor

An aqueous solution in which $NiSO_4 \cdot 6H_2O$ and $MnSO_4 \cdot H_2O$ were mixed in a molar ratio of 40:60, NaOH and $NH_4OH$ were added to a reactor and stirred. The temperature in the reactor was maintained at 45 °C, and a $N_2$ gas was

introduced into the reactor while a precursor synthesis reaction proceeded. After the reaction was completed, washing and dehydration were performed, thereby obtaining a hydroxide precursor with the composition of $Ni_{0.4}Mn_{0.6}(OH)_2$ (average particle diameter: 12.0 $\mu$m).

(b) First thermal treatment

An oxide-type precursor was obtained by raising the temperature of a calcination furnace with an $O_2$ atmosphere at a rate of 2 °C/min, maintaining the temperature at 550 °C, thermally treating the hydroxide precursor obtained in (a) for 5 hours, and performing furnace cooling.

(c) Second thermal treatment

A mixture was prepared by mixing the oxide-type precursor obtained in (b) and LiOH (Li/Metal molar ratio = 1.25) as a lithium raw material.

Subsequently, a first lithium manganese-based oxide (B-1) was obtained by raising the temperature of a calcination furnace with an $O_2$ atmosphere at a rate of 2 °C/min, maintaining the temperature at 900 °C, thermally treating the mixture for 8 hours, and performing furnace cooling.

Preparation Example 1-4. Preparation of second lithium manganese-based oxide (B-2)

(a) Preparation of precursor

An aqueous solution in which $NiSO_4 \cdot 6H_2O$ and $MnSO_4 \cdot H_2O$ were mixed in a molar ratio of 40:60, NaOH and $NH_4OH$ were added to a reactor and stirred. The temperature in the reactor was maintained at 45 °C, and a $N_2$ gas was introduced into the reactor to perform a precursor synthesis reaction. After the reaction was completed, washing and dehydration were performed, thereby obtaining a hydroxide precursor (average particle diameter: 12.0 $\mu$m) with the composition of $Ni_{0.4}Mn_{0.6}(OH)_2$.

(b) First thermal treatment

An oxide-type precursor was obtained by raising the temperature of a calcination furnace with an $O_2$ atmosphere at a rate of 2 °C/min, thermally treating the hydroxide precursor obtained in (a) for 5 hours while maintaining the temperature at 550 °C, and performing furnace cooling.

(c) Second thermal treatment

A mixture was prepared by mixing the precursor in an oxide state obtained in (b), LiOH (Li/Metal molar ratio = 1.25) as a lithium raw material, LiF in which the content of fluorine (F) was weighed to be 1.0 mol% based on metal elements excluding lithium in the precursor, and $WO_3$ in which the content of tungsten (W) was weighed to be 0.75 mol% based on metal elements excluding lithium in the precursor.

Subsequently, the temperature of a calcination furnace with an $O_2$ atmosphere was raised at a rate of 2 °C/min, the temperature was maintained at 900 °C, the mixture was thermally treated for 8 hours, and then furnace cooling was performed, thereby obtaining a second lithium manganese-based oxide (B-2).

Preparation Example 2. Preparation of positive electrode active material

A positive electrode active material was prepared by mixing the first lithium manganese-based oxide and the second lithium manganese-based oxide prepared according to Preparation Example 1 in a weight ratio listed in Table 1 below.

Table 1]

| Classification | First lithium manganese-based oxide | | Second lithium manganese-based oxide | |
|---|---|---|---|---|
| | A-1 (wt%) | A-2 (wt%) | B-1 (wt%) | B-2 (wt%) |
| Comparative Example 1 | - | 100 | - | - |
| Comparative Example 2 | - | - | - | 100 |

(continued)

| Classification | First lithium manganese-based oxide | | Second lithium manganese-based oxide | |
|---|---|---|---|---|
| | A-1 (wt%) | A-2 (wt%) | B-1 (wt%) | B-2 (wt%) |
| Comparative Example 3 | 60 | - | 40 | - |
| Example 1 | 54 | 6 | 40 | - |
| Example 2 | 30 | 30 | 40 | - |
| Example 3 | - | 60 | 40 | - |
| Example 4 | 60 | - | 36 | 4 |
| Example 5 | 60 | - | 20 | 20 |
| Example 6 | 60 | - | - | 40 |

Preparation Example 3. Manufacture of lithium secondary battery

A positive electrode slurry was prepared by dispersing 90 wt% each of the positive electrode active materials prepared according to Preparation Example 1, 4.5 wt% of carbon black and 5.5 wt% of a PVDF binder in N-methyl-2 pyrrolidone (NMP). The positive slurry was uniformly applied on an aluminum thin film with a thickness of 15 $\mu$m and dried under vacuum at 135 °C, thereby manufacturing a positive electrode for a lithium secondary battery.

The positive electrode, lithium foil as a counter electrode, a porous polyethylene film (Celgard 2300, thickness: 25 $\mu$m) as a separator and a liquid electrolyte prepared by adding $LiPF_6$ at 1.15M in a solvent in which ethylene carbonate, dimethyl carbonate and ethyl methyl carbonate were mixed in a volume ratio of 2:4:4 were used, thereby manufacturing a half-cell.

Experimental Example 1. Image analysis of lithium manganese-based oxides

(1) Secondary particles were selected from each of the lithium manganese-based oxides prepared according to Preparation Examples 1-1 to 1-4 and photographed using a scanning electron microscope to obtain an SEM image. Subsequently, 20 primary particles were selected in the order from longest-to-shortest minor axis lengths from among the primary particles exposed on the surface of the secondary particle from the SEM image and the major axis length and the minor axis length were measured using an Image analyzer program. From the measurement result, each of the average value (A) of the minor axis lengths of the primary particles, the maximum value (B) of the minor axis length of a primary particle, the minimum value (C) of the minor axis length of a primary particle, the average value (D) of the particle diameters of the primary particles, the maximum value (E) of the particle diameter of a primary particle, and the minimum value (F) of the particle diameter of a primary particle was calculated. The particle diameter of a primary particle was calculated as the average value of the major and minor axis lengths of the primary particle ([major axis length + minor axis length]/2).

(2) In addition, each of the selected secondary particles was cross-sectioned using a cross-section polisher (acceleration voltage: 5.0 kV, 4-hour milling) and photographed with a scanning electron microscope to obtain a cross-sectional SEM image.

Subsequently, the number of voids (G) was counted from the cross-section of the secondary particle in the cross-sectional SEM image using an Image analyzer program, and then cross-sectional porosity (H) was calculated.

The cross-sectional porosity (H) was obtained by binarizing the cross-sectional SEM image, and then calculating the ratio of the sum of the area of all voids present in the secondary particle to the total area of the cross-section of the secondary particle ([the sum of the area of all voids in the secondary particle / the total area of the cross-section of the secondary particle]/100).

In addition, when the center of the secondary particle was determined from the binarized cross-sectional SEM image and the distance from the center of the secondary particle to the surface of the secondary particle is r, a region with the distance from the center of the secondary particle of 0.5r to 1.0r was defined as an external bulk region.

An external bulk porosity (I) was calculated by dividing the sum of the area of all voids present in the external bulk region by the total area of the cross-section of the external bulk region ([the sum of the area of all voids in the external bulk region / the total area of the cross-section of the external bulk region]/100).

The measurement results are shown in Table 2 below.

Table 2

| Classification | Units | First lithium manganese-based oxide | | Second lithium manganese-based oxide | |
|---|---|---|---|---|---|
| | | A-1 | A-2 | B-1 | B-2 |
| A | nm | 95 | 175 | 73 | 155 |
| B | nm | 162 | 308 | 97 | 247 |
| C | nm | 48 | 93 | 51 | 86 |
| D | nm | 135 | 267 | 134 | 198 |
| E | nm | 195 | 377 | 166 | 282 |
| F | nm | 82 | 186 | 97 | 127 |
| G | ea | 107 | 60 | 222 | 52 |
| H | % | 10.4 | 2.6 | 15.4 | 1.5 |
| I | % | 1.2 | 0.09 | 6.2 | 0.1 |

Experimental Example 2. Measurement of press density of positive electrode active material

A press density was measured after compressing 3g each of the positive electrode active materials prepared in Preparation Example 2 under the press condition shown in Table 3 below for 5 seconds using a pelletizer.

The measurement results are shown in Table 3 below.

Table 3]

| Pressure condition | 2.5 tons | 4.5 tons |
|---|---|---|
| Units | g/cc | g/cc |
| Comparative Example 1 | 2.49 | 2.72 |
| Comparative Example 2 | 2.52 | 282 |
| Comparative Example 3 | 257 | 2.84 |
| Example 1 | 262 | 2.88 |
| Example 2 | 2.71 | 2.91 |
| Example 3 | 2.75 | 2.95 |
| Example 4 | 2.64 | 2.90 |
| Example 5 | 2.7 | 2.92 |
| Example 6 | 2.72 | 2.93 |

Referring to the results of Comparative Examples 1 to 3, it can be confirmed that the 2.5-ton press density for Comparative Example 3 (bimodal-type positive electrode active material including A-1 and B-1) was slightly higher than those for Comparative Example 1 (unimodal-type positive electrode active material including A-2) and Comparative Example 2 (unimodal-type positive electrode active material including B-2), but there is no significant difference in 4.5-ton press density between Comparative Example 2 and Comparative Example 3.

On the other hand, referring to Examples 1 to 6 in which at least one selected from the first lithium manganese-based oxide and the second lithium manganese-based oxide includes a secondary particle formed by aggregating a plurality of large-diameter primary particles, it can be confirmed that both the 2.5-ton press density and the 4.5-ton press density show a significant improvement effect compared with Comparative Examples 1 to 3.

Experimental Example 3. Evaluation of electrochemical properties of lithium secondary battery

According to charging/discharging experiments performed on each of the lithium secondary batteries (half-cells) manufactured in Preparation Example 3 using an electrochemical analyzer (Toyo, Toscat-3100) at 25 °C in a voltage range of 2.0V to 4.6V at a discharge rate of 0.1C to 5.0C, an initial charge capacity, an initial discharge capacity, a capacity per volume, an initial reversible efficiency and a rate characteristic (rate capability (C-rate)) were measured. The capacity per volume was calculated by multiplying the initial discharge capacity and the press density (4.5-ton press density of Table 3).

In addition, the same lithium secondary battery was charged/discharged 50 times at 25 °C in an operating voltage range of 2.0V to 4.6V under the condition of 1C/1C, and then a rate of the discharge capacity at the 50th cycle to the initial discharge capacity (capacity retention) was measured.

The measurement results are shown in Table 4 below.

Table 4]

| Classification | Initial charge capacity (0.1C-rate) | Initial discharge capacity (0.1C-rate) | Capacity per unit volume | Initial reversible efficiency | Rate capability (2C/0.1C) | Rate capability (5C/0.1C) | Capacity retention (1C-rate, 50cycle) |
|---|---|---|---|---|---|---|---|
| Units | mAh/g | mAh/g | mAh/cc | % | % | % | % |
| Comparative Example 1 | 266 | 229 | 626 | 86.1 | 74.3 | 61.7 | 90.1 |
| Comparative Example 2 | 260 | 226 | 630 | 86.9 | 74.4 | 60.2 | 91.9 |
| Comparative Example 3 | 262 | 228 | 642 | 867 | 75.0 | 62.9 | 93.2 |
| Example 1 | 263 | 228 | 656 | 867 | 74.9 | 62.8 | 93.1 |
| Example 2 | 263 | 228 | 663 | 86.7 | 74.9 | 62.4 | 92.6 |
| Example 3 | 264 | 229 | 675 | 86.8 | 74.8 | 61.9 | 92.0 |
| Example 4 | 263 | 228 | 660 | 86.5 | 75.0 | 62.9 | 93.1 |
| Example 5 | 262 | 227 | 664 | 86.6 | 74.8 | 62.6 | 92.6 |
| Example 6 | 262 | 227 | 666 | 86.6 | 74.6 | 62.2 | 92.0 |

Referring to the result in Table 4, referring to Example 1 to 6 in which at least one selected from the first lithium manganese-based oxide and the second lithium manganese-based oxide includes a secondary particle formed by aggregating a plurality of large-diameter primary particles, it can be confirmed that the capacity per unit volume is improved compared to Comparative Examples 1 to 3.

According to the present invention, compared with a commercially available ternary lithium composite oxide with a nickel-cobalt-manganese (NCM) or nickel-cobalt-aluminum (NCA) composition, it is possible to improve the limitations of the conventional overlithiated lithium manganese-based oxide, which has various disadvantages in terms of electrochemical properties and/or stability.

Specifically, according to the present invention, lithium manganese-based oxides are prepared into small and large particles, and a bimodal-type positive electrode active material is provided as a mixture of small and large particles, so the low energy density per unit volume can be improved to a certain extent.

In addition, according to the present invention, as at least one of the small and large particles includes a secondary particle in which the growth of primary particles is induced (secondary particle formed by aggregating large-diameter primary particles), the energy density per unit volume of the bimodal-type positive electrode active material can be further improved.

Particularly, as the inner porosity of the secondary particle (porosity between primary particles) is reduced, the secondary particle in which the growth of primary particles is induced, which is included in at least one of a small particle and a large particle, can contribute to the improvement in energy density per unit volume of the bimodal-type positive electrode active material.

Moreover, as the specific surface area of the secondary particle is reduced, the secondary particle in which the growth of primary particles is induced, which is included in at least one of a small particle and a large particle, can prevent battery performance from being rapidly degraded due to a side rection during an initial battery reaction under a high voltage condition.

For example, when the specific surface area(s) of small and/or large particles is(are) reduced, it is possible to reduce side reactions between the small and/or large particles and the liquid electrolyte. Particularly, OLO such as the lithium manganese-based oxide is advantageous for exhibiting a high capacity under a high voltage operating environment, and it is important to reduce side reactions between the lithium manganese-based oxide and the liquid electrolyte because the possibility of side reactions occurring between the lithium manganese-based oxide and the liquid electrolyte can be promoted as the operating voltage increases.

Accordingly, as the side reactions between the small and/or large particles and the liquid electrolyte are reduced, the stability and lifetime of a lithium secondary battery using the bimodal-type positive electrode active material defined herein can be improved. Particularly, it is possible for a lithium secondary battery with a positive electrode active material having suppressed side reactions with a liquid electrolyte to be operated at a higher voltage.

In addition to the above effects, specific effects of the present invention will be described together while explaining specific details for carrying out the present invention.

In the above, the embodiments of the present invention have been described, but it will be understood by those of ordinary skill in the art that the present invention may be changed and modified in various ways by addition, alteration, or deletion of components without departing from the spirit of the present invention defined in the appended claims.

**Claims**

1. A bimodal-type positive electrode active material comprising a first lithium manganese-based oxide as a small particle and a second lithium manganese-based oxide as a large particle,

   wherein the first lithium manganese-based oxide and the second lithium manganese-based oxide are oxides in which a phase belonging to a C2/m space group and a phase belonging to a R3-m space group are dissolved or complexed,
   the first lithium manganese-based oxide and the second lithium manganese-based oxide each independently comprises at least one type of secondary particle selected from a secondary particle formed by aggregating a plurality of large-diameter primary particles and a secondary particle formed by aggregating a plurality of small-diameter primary particles, and
   at least one selected from the first lithium manganese-based oxide and the second lithium manganese-based oxide comprises a secondary particle formed by aggregating a plurality of large-diameter primary particles.

2. The positive electrode active material of claim 1, wherein in the first lithium manganese-based oxide, the secondary particle formed by aggregating a plurality of large-diameter primary particles and the secondary particle formed by aggregating a plurality of small-diameter primary particles are comprised in a weight ratio of 10:90 to 100:0.

3. The positive electrode active material of any one of the preceding claims, wherein the average value of the minor axis lengths of the large-diameter primary particles is 100 nm or more and 500 nm or less,

   the average value of the minor axis lengths of the small-diameter primary particles is 50 nm or more and 300 nm or less, and
   the average value of the minor axis lengths of the small-diameter primary particles is smaller than that of the large-diameter primary particles.

4. The positive electrode active material of any one of the preceding claims, wherein the interparticle porosity between the primary particles measured from the cross-sectional SEM image of the secondary particle formed by aggregating large-diameter primary particles is smaller than that of the secondary particle formed by aggregating small-diameter primary particles.

5. The positive electrode active material of any one of the preceding claims, wherein the interparticle porosity between the primary particles measured from the cross-sectional SEM image of the secondary particle formed by aggregating large-diameter primary particles is 10% or less.

6. The positive electrode active material of any one of the preceding claims, wherein when the distance from the center to surface of the secondary particle, set from the cross-sectional SEM image of the secondary particle, is r, and a region with a distance from the center of the secondary particle of 0.5r to 1.0r is an external bulk region, a porosity in the external bulk region measured from the cross-sectional SEM image of the secondary particle formed by aggregating large-diameter primary particles is smaller than that of secondary particles formed by aggregating the small-diameter primary particles.

7. The positive electrode active material of any one of the preceding claims, wherein, in the second lithium manganese-based oxide, a secondary particle formed by aggregating a plurality of large-diameter primary particles and a secondary particle formed by aggregating a plurality of small-diameter primary particles are comprised in a weight ratio of 10:90 to 100:0.

8. The positive electrode active material of any one of the preceding claims, wherein the average value of the minor axis lengths of the large-diameter primary particles is 100 nm or more and 500 nm or less,

   the average value of the minor axis lengths of the small-diameter primary particles is 50 nm or more and 300 nm or less, and
   the average value of the minor axis lengths of the small-diameter primary particles is smaller than that of the large-diameter primary particles.

9. The positive electrode active material of any one of the preceding claims, wherein the interparticle porosity between the primary particles measured from the cross-sectional SEM image of the secondary particle formed by aggregating large-diameter primary particles is smaller than that of the secondary particle formed by aggregating small-diameter primary particles.

10. The positive electrode active material of any one of the preceding claims, wherein the interparticle porosity between the primary particles measured from the cross-sectional SEM image of the secondary particle formed by aggregating large-diameter primary particles is 15% or less.

11. The positive electrode active material of any one of the preceding claims, wherein when the distance from the center to surface of the secondary particle, set from the cross-sectional SEM image of the secondary particle, is r, and a region with a distance from the center of the secondary particle of 0.5r to 1.0r is an external bulk region,
    a porosity in the external bulk region measured from the cross-sectional SEM image of the secondary particle formed by aggregating large-diameter primary particles is smaller than that of secondary particles formed by aggregating the small-diameter primary particles.

12. The positive electrode active material of any one of the preceding claims, wherein the first lithium manganese-based oxide and the second lithium manganese-based oxide each independently comprise at least one selected from nickel, cobalt, and manganese.

13. The positive electrode active material of any one of the preceding claims, wherein at least one selected from the first lithium manganese-based oxide and the second lithium manganese-based oxide comprises a secondary particle doped with at least one dopant selected from a metal cation dopant and a halogen anion dopant.

14. The positive electrode active material of any one of the preceding claims, wherein the secondary particle formed by aggregating a plurality of large-diameter primary particles is doped with at least one dopant selected from a metal cation dopant and a halogen anion dopant.

15. The positive electrode active material of any one of the preceding claims, wherein the first lithium manganese-based oxide and the second lithium manganese-based oxide is each independently represented by Formula 1 below:

    [Formula 1]    $rLi_2MnO_{3-b}X_{b'}\cdot(1-r)Li_aM1_xM2_yM3_zO_{2-b}X_b$

    Wherein,

    M1 is at least one selected from Ni and Mn,
    M2 is at least one selected from Ni, Mn, Co, Al, P, Nb, B, Si, Ti, Zr, Ba, K, Mo, Fe, Cu, Cr, Zn, Na, Ca, Mg, Pt, Au, Eu, Sm, W, Ce, V, Ta, Sn, Hf, Gd and Nd,
    M3 is at least one selected from W, Mo and Nb,
    M1 to M3 do not overlap with each other,

X and X' are halogens that can substitute for at least some of the oxygens present in the lithium manganese-based oxide,

$0 < r \leq 0.7$, $0 < a \leq 1$, $0 \leq b \leq 0.1$, $0 \leq b' \leq 0.1$, $0 < x \leq 1$, $0 \leq y < 1$, $0 \leq z \leq 0.1$, and $0 < x+y+z \leq 1$.

Europäisches
Patentamt

European
Patent Office

Office européen
des brevets

# EUROPEAN SEARCH REPORT

Application Number

EP 23 18 1062

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 109 428 076 A (SAMSUNG ELECTRONICS CO LTD; SAMSUNG SDI CO LTD) 5 March 2019 (2019-03-05) * claims; examples * | 1-15 | INV. C01G53/00 C01G45/00 H01M4/505 |
| X | WO 2022/139387 A1 (POSCO [KR]; RES INST IND SCIENCE & TECH [KR]; POSCO CHEM CO LTD [KR]) 30 June 2022 (2022-06-30) * claims; table 1 * | 1-14 | |
| X | EP 3 733 610 A1 (SAMSUNG SDI CO LTD [KR]; SEOUL NAT UNIV R&DB FOUNDATION [KR]) 4 November 2020 (2020-11-04) * paragraphs [0022] – [0024]; claims * | 1-14 | |
| A | US 10 236 508 B2 (SAMSUNG ELECTRONICS CO LTD [KR]; SAMSUNG SDI CO LTD [KR]) 19 March 2019 (2019-03-19) * claims * | 1-15 | |
| A | WO 2015/108163 A1 (ASAHI GLASS CO LTD [JP]) 23 July 2015 (2015-07-23) * claims * | 1-15 | TECHNICAL FIELDS SEARCHED (IPC) C01G H01M |
| A | EP 4 047 689 A1 (ECOPRO BM CO LTD [KR]) 24 August 2022 (2022-08-24) * paragraph [0056]; claims * | 1-15 | |
| A | EP 3 819 262 A1 (ECOPRO BM CO LTD [KR]) 12 May 2021 (2021-05-12) * claims * | 1-15 | |
| A | EP 4 047 691 A1 (ECOPRO BM CO LTD [KR]) 24 August 2022 (2022-08-24) * claims * | 1-15 | |
| A | EP 4 047 692 A2 (ECOPRO BM CO LTD [KR]) 24 August 2022 (2022-08-24) * claims * | 1-15 | |

The present search report has been drawn up for all claims

| Place of search | Date of completion of the search | Examiner |
|---|---|---|
| Munich | 21 March 2024 | Nobis, Barbara |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 18 1062

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | | Publication date | Patent family member(s) | | Publication date |
|---|---|---|---|---|---|
| CN 109428076 | A | 05-03-2019 | CN | 109428076 A | 05-03-2019 |
| | | | US | 2019074513 A1 | 07-03-2019 |
| WO 2022139387 | A1 | 30-06-2022 | CN | 116636040 A | 22-08-2023 |
| | | | EP | 4266424 A1 | 25-10-2023 |
| | | | JP | 2024500157 A | 04-01-2024 |
| | | | KR | 20220089242 A | 28-06-2022 |
| | | | WO | 2022139387 A1 | 30-06-2022 |
| EP 3733610 | A1 | 04-11-2020 | EP | 3733609 A1 | 04-11-2020 |
| | | | EP | 3733610 A1 | 04-11-2020 |
| | | | KR | 20200125442 A | 04-11-2020 |
| | | | KR | 20200125443 A | 04-11-2020 |
| US 10236508 | B2 | 19-03-2019 | KR | 20170080104 A | 10-07-2017 |
| | | | US | 2017194643 A1 | 06-07-2017 |
| WO 2015108163 | A1 | 23-07-2015 | JP | 6467352 B2 | 13-02-2019 |
| | | | JP | WO2015108163 A1 | 23-03-2017 |
| | | | WO | 2015108163 A1 | 23-07-2015 |
| EP 4047689 | A1 | 24-08-2022 | CN | 114556627 A | 27-05-2022 |
| | | | EP | 4047689 A1 | 24-08-2022 |
| | | | JP | 7395724 B2 | 11-12-2023 |
| | | | JP | 2022553262 A | 22-12-2022 |
| | | | JP | 2024023430 A | 21-02-2024 |
| | | | KR | 20230142684 A | 11-10-2023 |
| | | | US | 2022393153 A1 | 08-12-2022 |
| | | | WO | 2021075942 A1 | 22-04-2021 |
| EP 3819262 | A1 | 12-05-2021 | CN | 112687866 A | 20-04-2021 |
| | | | EP | 3819262 A1 | 12-05-2021 |
| | | | JP | 7128245 B2 | 30-08-2022 |
| | | | JP | 2021068701 A | 30-04-2021 |
| | | | JP | 2022172169 A | 15-11-2022 |
| | | | KR | 20220088401 A | 27-06-2022 |
| | | | US | 2021119208 A1 | 22-04-2021 |
| EP 4047691 | A1 | 24-08-2022 | CN | 114556628 A | 27-05-2022 |
| | | | EP | 4047691 A1 | 24-08-2022 |
| | | | JP | 7408794 B2 | 05-01-2024 |
| | | | JP | 2022552562 A | 16-12-2022 |
| | | | US | 2022411282 A1 | 29-12-2022 |
| | | | WO | 2021075940 A1 | 22-04-2021 |
| EP 4047692 | A2 | 24-08-2022 | CN | 114556635 A | 27-05-2022 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 23 18 1062

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2024

| Patent document cited in search report | Publication date | Patent family member(s) | Publication date |
|---|---|---|---|
| | | EP 4047692 A2 | 24-08-2022 |
| | | KR 20210046523 A | 28-04-2021 |
| | | KR 20210046528 A | 28-04-2021 |
| | | KR 20210046572 A | 28-04-2021 |
| | | KR 20210046575 A | 28-04-2021 |
| | | KR 20230053558 A | 21-04-2023 |

EPO FORM P0459

For more details about this annex : see Official Journal of the European Patent Office, No. 12/82